# EUROPEAN PATENT APPLICATION

(11) **EP 2 942 879 A2**
(43) Date of publication of application: **11.11.2015**
(21) Application number: 15166508.0
(22) Date of filing: 06.05.2015
(51) Int. Cl.: H04B 7/04, H04B 7/06, H04L 5/00

(54) **METHOD OF HANDLING CHANNEL STATUS INFORMATION**

(30) Priority: 06.05.2014 US 201461989492 P; 05.05.2015 US 201514703892
(71) Applicant: Acer Incorporated, New Taipei City 221 (TW)
(72) Inventor: Lee, Chien-Min, 221 New Taipei City (TW)
(74) Representative: Straus, Alexander

(57) **Abstract**

A method of handling channel status information (CSI) for a communication device comprises transmitting a first CSI report for a first cell of a network to the network; and dropping a second CSI report for a second cell of the network, when the second CSI report collides with the first CSI report and the second cell is configured with an on-off mechanism.

## Description

### Field of the Invention

The present invention relates to a method of handling channel status information.

### Background of the Invention

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increase of various needs. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmissions/reception, uplink (UL) multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

The UE may transmit a channel status information (CSI) report or perform a sounding reference signal (SRS) transmission for one or more cells (e.g., serving cell(s)) of one or more eNBs, when the UE is scheduled to transmit the CSI report or the SRS transmission for the cell(s). A collision may occur between a first CSI report and a second CSI report. In addition, the collision may also occur between the SRS transmission and the CSI report. Further, one of the cell(s) (e.g., serving cell) of the eNB where the CSI report or the SRS transmission is transmitted for may be configured with an on-off mechanism. Thus, how to handle the CSI report and the SRS transmission under the collision and the on-off mechanism is an important problem to be solved.

On the other hand, a valid CSI reference resource (CSI-RS) is corresponding to the CSI report. A first valid CSI-RS corresponding to a first CSI report and a second CSI-RS corresponding to a second valid CSI report may be the same under the on-off mechanism. Thus, how to process the CSI reports and CSI measurement under the on-off mechanism is an important problem to be solved. In addition, how to perform the communication operation with the cell under the on-off mechanism is an important problem to be solved.

### Summary of the Invention

The present invention therefore provides a method for handling channel status information and related communication device to solve the abovementioned problem.

This is achieved by a method and a communication device handling the channel status information transmission according to the independent claims here below. The dependent claims pertain to corresponding further developments and improvements.

A method of handling channel status information (CSI) for a communication device comprises transmitting a first CSI report for a first cell of a network to the network; and dropping a second CSI report for a second cell of the network, when the second CSI report collides with the first CSI report and the second cell is configured with an on-off mechanism.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.
Fig. 6 is a schematic diagram of the allocations of the CSI reference sources and the CSI reports according to an example of the present invention.
Fig. 7 is a flowchart of a process according to an example of the present invention.
Fig. 8 is a schematic diagram of the on-off state, the CSI repots and the cells according to an example of the present invention.
Fig. 9 is a flowchart of a process according to an example of the present invention.
Fig. 10 is a schematic diagram of the on-off states of the cells according to an example of the present invention.
Fig. 11 is a flowchart of a process according to an example of the present invention.
Fig. 12 is a schematic diagram of the scheduling and the communication operation according to an example of the present invention.
Fig. 13 is a schematic diagram of the scheduling and the on-off state according to an example of the present invention.

### Detailed Description

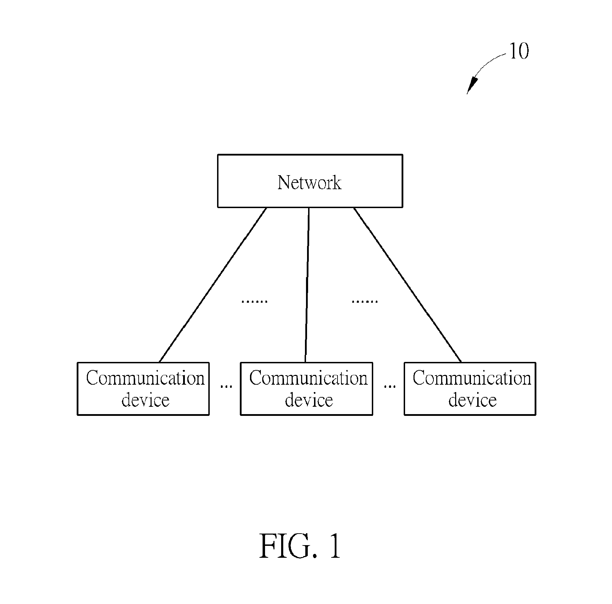

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. Practically, the network may be a universal terrestrial radio access network (UTRAN) comprising at least one Node-B (NB) in a universal mobile telecommunications system (UMTS). In another example, the network may be an evolved UTRAN (E-UTRAN) comprising at least one evolved NB (eNB) and/or at least one relay in a long term evolution (LTE) system, a LTE-Advanced (LTE-A) system or an evolution of the LTE-A system.

Furthermore, the network may also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information can be processed by both the UTRAN/E-UTRAN and the core network, and the decisions are made after coordination and/or cooperation are performed by the UTRAN/E-UTRAN and the core network.

A communication device may be a user equipment (UE), a low cost device (e.g., machine type communication (MTC) device), a device-to-device (D2D) device, a mobile phone, a laptop, a tablet computer, an electronic book, a portable computer system, or combination thereof. In addition, the network and the communication device may be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

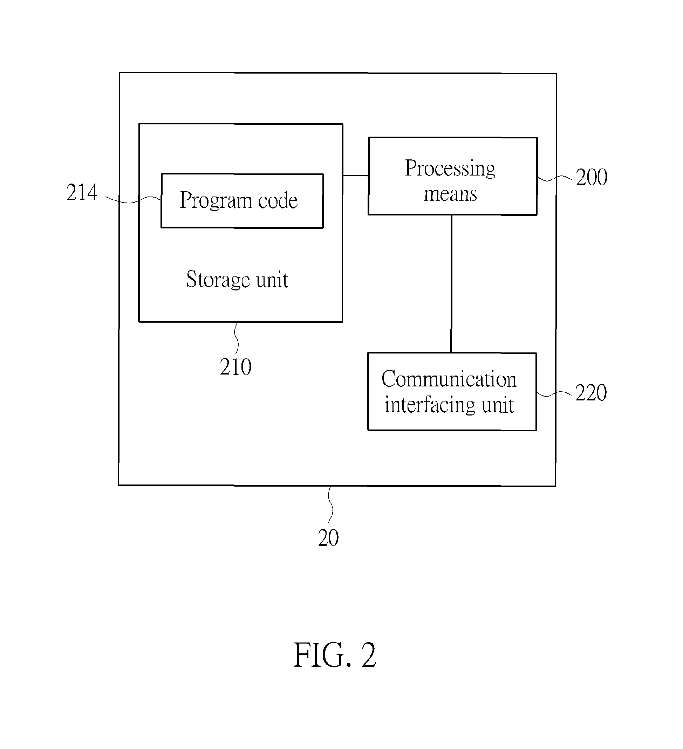

Fig. 2 is a schematic diagram of a communication device 20 according to an example of the present invention. The communication device 20 may be a communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

In addition, the on-off mechanism of a cell may include that a state of the cell changes from an off state to an on state or from the on state to the off state. That is, the cell configured with the on-off mechanism means that the state of the cell is the on (or off) state in the frame n (or subframe n) and the state of the cell becomes the off (or on) state in the frame (n+k) (or subframe (n+k)), where k is a positive integer. Further, in the radio communication environment, the cell may obey certain contention rule (e.g., listen before talk, LBT) to obtain the channel resource to operate on, when the cell is operated in an unlicensed band (e.g., 5GHz). In the situation, the state of the cell may be regarded as the on state when the cell obtains the channel resource. Otherwise, the state of the cell may be regarded as the off state in the present invention.

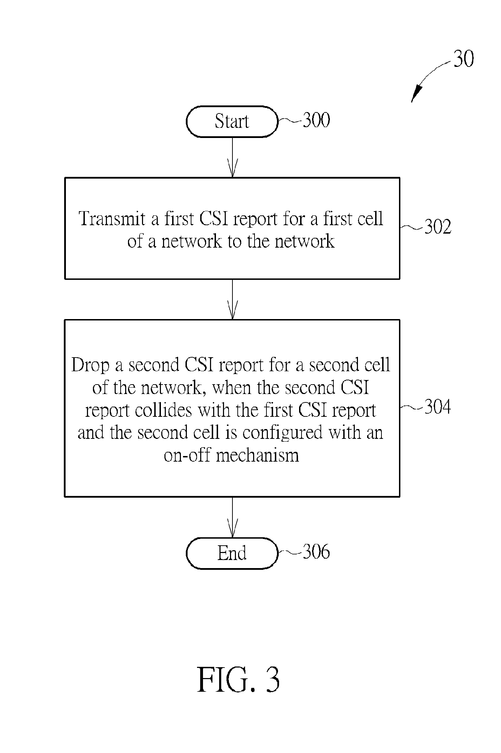

Fig. 3 is a flowchart of a process 30 according to an example of the present invention. The process 30 may be utilized in a communication device for handling channel status information (CSI). The process 30 may be compiled into the program code 214 and includes the following steps:
- Step 300:: Start.
- Step 302:: Transmit a first CSI report for a first cell of a network to the network.
- Step 304:: Drop a second CSI report for a second cell of the network, when the second CSI report collides with the first CSI report and the second cell is configured with an on-off mechanism.
- Step 306:: End.

According to the process 30, the communication device may transmit a first CSI report for a first cell of a network to the network. Then, the communication device may drop a second CSI report for a second cell of the network, when the second CSI report collides with the first CSI report and the second cell is configured with an on-off mechanism. In other words, the on-off mechanism of the second cell may be taken into account first, e.g., before legacy dropping rules (e.g., specified in 3rd Generation Partnership Project (3GPP) LTE Rel-8/9/10/11/12) are realized, when handling the CSI reports. Note that the legacy dropping rules may be determined according to priorities of the CSI reports, when the first CSI report collides with the second CSI report. In one example, the first CSI report may collide with the second CSI report in an UL subframe, if the second CSI report is scheduled to be transmitted in the UL subframe.

Realization of the present invention is not limited to the above description.

The communication device may transmit the CSI report (e.g., the first CSI report and/or the second CSI report in the process 30) to the network, where the CSI report may be scheduled by the network. One of a first reporting type of the first CSI report and a second reporting type of the second CSI report may include one of a rank indicator (RI), a wideband channel quality indicator (WB-CQI), a subband channel quality indicator (SB-CQI) and a precoding matrix indicator (PMI). Further, the CSI report may be a periodic report, or the CSI report may be an aperiodic report. The CSI report may be transmitted to the network via a physical UL control channel (PUCCH) or a physical UL shared channel (PUSCH).

A collision may occur between the first CSI report for the first cell of the network and the second CSI report for the second cell of the network in a subframe. In addition, the second cell may be configured with the on-off mechanism. According to the legacy priority criterions, a priority of the first CSI report for the first cell may be higher than the priority of the second CSI report for the second cell. If the first CSI report collides with the second CSI report, the first CSI report is transmitted in the subframe and the second CSI report is dropped without considering the on-off mechanism. In comparison, according to the present invention, the on-off state of the cell is taken into account first, e.g., before the legacy dropping rules are realized, when the collision occurs between the two CSI reports.

In one example, a first reporting type of the first CSI report and a second reporting type of the second CSI report may be different. For example, the first reporting type of the first CSI report may be the CQI (e.g., SB-CQI or WB-CQI) and the second reporting type of the second CSI report may be the RI. The priority of the RI is higher than the priority of the CQI according to the legacy priority criterions. However, according to the present invention, the second CSI report is dropped and the first CSI report is transmitted in an UL subframe, when the second CSI report collides with the first CSI report in the UL subframe and the second cell is configured with the on-off mechanism.

In one example, a first reporting type of the first CSI report for the first cell and a second reporting type of the second CSI report for the second cell may be the same. For example, the first reporting type of the first CSI report is the RI and the second reporting type of the second CSI report is also the RI. The first serving cell index of the first cell is 2 and the second serving cell index of the second cell is 1. The priority of the serving cell index 1 is higher than the priority of the serving cell index 2 according to the legacy priority criterions. However, according to the present invention, the second CSI report is dropped and the first CSI report is transmitted in an UL subframe, when the second CSI report collides with the first CSI report in the UL subframe and the second cell is configured with the on-off mechanism.

In one example, a first serving cell index of the first cell and a second serving cell index of the second cell may be different. In addition, the CSI reporting types of the first CSI report and the second cell CSI report may be the same. For example, the first serving cell index of the first cell is 2 and the second serving cell index of the second cell is 1. The priority of the second serving cell index 1 is higher than the priority of the first serving cell index 2 according to the legacy priority criterions. However, according to the present invention, the second CSI report (e.g., RI with serving cell index 1) for the second cell is dropped and the first CSI report (e.g., RI with serving cell index 2) for the first cell is transmitted in an UL subframe, when the second CSI report collides with the first CSI report in the UL subframe and the second cell is configured with the on-off mechanism.

In one example, a first CSI process identification (ID) of the first CSI report and a second CSI process ID of the second CSI report may be the same. In addition, the CSI reporting types of the first CSI report and the second cell CSI report may be the same. The serving cell index of the first cell may be different from that of the second cell. For example, the first CSI process ID of the first CSI report is 1 and the second CSI process ID of the second CSI report is also 1. The first serving cell index of the first cell is 2 and the second serving cell index of the second cell is 1. The priority of the serving cell index 1 is higher than the priority of the serving cell index 2 according to the legacy priority criterions. However, according to the present invention, the second CSI report (e.g., RI with serving cell index 1 and for CSI process ID 1) is dropped and the first CSI report (e.g., RI with serving cell index 2 and for CSI process ID 1) is transmitted in an UL subframe, when the second CSI report collides with the first CSI report in the UL subframe and the second cell is configured with the on-off mechanism.

In one example, a first CSI process ID of the first CSI report and a second CSI process ID of the second CSI report may be different. In addition, the CSI reporting types of the first CSI report and the second cell CSI report may be the same. For example, the first CSI process ID of the first CSI report is 2 and the second CSI process ID of the second CSI report is 1. In this situation, the priority of the second CSI process ID 1 is higher than the priority of the first CSI process ID 2 according to the legacy priority criterions. However, according to the present invention, the second CSI report (e.g., RI for CSI process ID 1) is dropped and the first CSI report (e.g., RI for CSI process ID 2) is transmitted in an UL subframe, when the second CSI report collides with the first CSI report in the UL subframe and the second cell is configured with the on-off mechanism.

In one example, the first CSI report may be configured with a CSI process ID, and the second CSI report may not be configured with any CSI process ID. In addition, the CSI reporting types of the first CSI report and the second cell CSI report may be the same. For example, the first CSI process ID of the first CSI report is 2 and the second CSI report is not configured with any CSI process ID. The priority of CSI without CSI process ID is higher than the priority of the first CSI process ID 2 according to the legacy priority criterions. However, according to the present invention, the second CSI report (e.g., RI for the report not configured with CSI process ID) is dropped and the first CSI report (e.g., RI for CSI process ID 2) is transmitted in an UL subframe, when the second CSI report collides with the first CSI report in the UL subframe and the second cell is configured with the on-off mechanism.

In one example, the first CSI report may not be configured with any CSI process ID, and the second CSI report may be configured with a CSI process ID 1. In addition, the CSI reporting types of the first CSI report and the second cell CSI report may be the same. For example, the first CSI report is not configured with any CSI process ID and the second CSI process ID of the second CSI report is 1. In this situation, the priority of the second CSI process ID 1 is higher than the priority of CSI without process ID according to the legacy priority criterions. However, according to the present invention, the second CSI report (e.g., RI for CSI process ID 1) is dropped and the first CSI report (e.g., RI for the report not configured with CSI process ID) is transmitted in an UL subframe when the second CSI report collides with the first CSI report in the UL subframe and the second cell is configured with the on-off mechanism.

As a result, according to the above description, the collision between the CSI reports is solved, when one of the cells corresponding to one of the CSI reports is configured with the on-off mechanism.

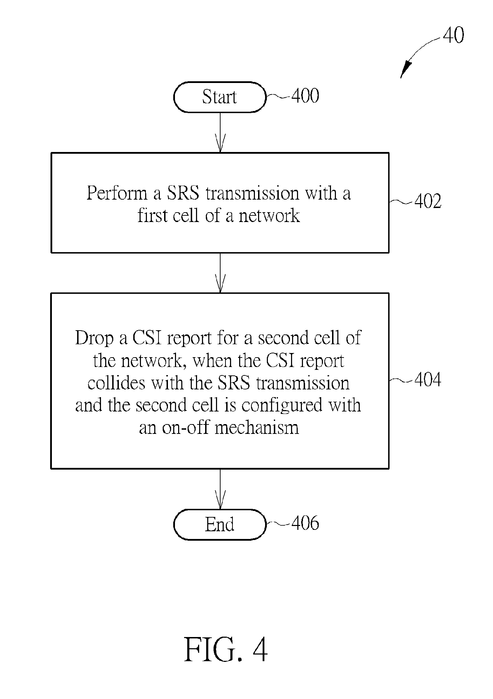

Fig. 4 is a flowchart of a process 40 according to an example of the present invention. The process 40 may be utilized in a communication device for handling CSI. The process 40 may be compiled into the program code 214 and includes the following steps:
- Step 400:: Start.
- Step 402:: Perform a sounding reference signal (SRS) transmission with a first cell of a network.
- Step 404:: Drop a CSI report for a second cell of the network, when the CSI report collides with the SRS transmission and the second cell is configured with an on-off mechanism.
- Step 406:: End.

According to the process 40, the communication device may perform a SRS transmission with a first cell of a network. Then, the communication device may drop a CSI report for a second cell of the network, when the CSI report collides with the SRS transmission and the second cell is configured with an on-off mechanism. In other words, the on-off state of the second cell may be taken into account first, e.g., before the legacy dropping rules (e.g., specified in 3rd Generation Partnership Project (3GPP) LTE Rel-8/9/10/11/12) are realized, when handling the CSI report and the SRS transmission. Note that the legacy dropping rules may be determined according to priorities of the CSI report and the SRS transmission, when the SRS transmission collides with the CSI report.

Realization of the present invention is not limited to the above description.

The communication device may transmit the CSI report to the network, where the CSI report may be scheduled by the network. The reporting type of the CSI report may include one of the RI, the WB-CQI, the SB-CQI and the PMI. The communication device may perform the SRS transmission to the network, where the SRS transmission may be scheduled by the network. Further, the CSI report may be a periodic report, or the CSI report may be an aperiodic report. The CSI report may be transmitted to the network via the PUCCH or the PUSCH. In addition, the on-off mechanism of a cell may include that a state of the cell changes from an off state to an on state or from the on state to the off state. That is, the cell configured with the on-off mechanism means that the state of the cell is the on (or off) state in the frame n (or subframe n) and the state of the cell becomes the off (or on) state in the frame (n+k) (or subframe (n+k)), where k is a positive integer.

The collision may occur between the SRS transmission for the first cell and the CSI report for the second cell in the subframe. In addition, the second cell may be configured with the on-off mechanism. According to the legacy priority criterions, the priority of the CSI report is higher than the priority of the SRS transmission. If the SRS transmission collides with the CSI report in a subframe, the CSI report is transmitted in the subframe and the SRS transmission is dropped without considering the on-off mechanism. In comparison, according to the present invention, the on-off mechanism of the cell is taken into account first, e.g., before the legacy dropping rules are realized, when the collision occurs between the SRS transmission and the CSI report.

In one example, the CSI report for the second cell of the network may be dropped, when the CSI report collides with the SRS transmission and the second cell is configured with the on-off mechanism. For example, the reporting type of the CSI report for the second cell may be the RI. The priority of the RI for the second cell is higher than the priority of the SRS transmission for the first cell according to the legacy priority criterions. However, according to the present invention, the CSI report is dropped and the SRS transmission is transmitted in an UL subframe, when the CSI report collides with the SRS transmission in the UL subframe and the second cell is configured with the on-off mechanism. In one example, the first cell in the process 40 may be a primary cell.

As a result, according to the above description, the collision between the CSI report and the SRS transmission is solved, when the cell for transmitting the CSI report is configured with the on-off mechanism.

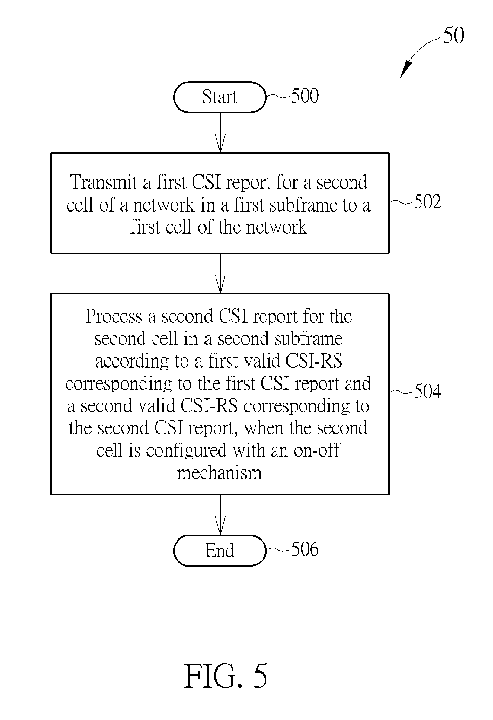

Fig. 5 is a flowchart of a process 50 according to an example of the present invention. The process 50 may be utilized in a communication device for handling CSI. The process 50 may be compiled into the program code 214 and includes the following steps:
- Step 500:: Start.
- Step 502:: Transmit a first CSI report for a second cell of a network in a first subframe to a first cell of the network.
- Step 504:: Process a second CSI report for the second cell in a second subframe according to a first valid CSI reference resource (CSI-RS) corresponding to the first CSI report and a second valid CSI-RS corresponding to the second CSI report, when the second cell is configured with an on-off mechanism.
- Step 506:: End.

According to the process 50, the communication device may transmit a first CSI report for a second cell of a network in a first subframe to a first cell (or second cell) of the network. Then, the communication device may process a second CSI report for the second cell in a second subframe according to a first valid CSI-RS corresponding to the first CSI report and a second valid CSI-RS corresponding to the second CSI report, when the second cell is configured with an on-off mechanism. In other words, the second CSI report for the second cell in the second subframe is processed according to the first valid CSI-RS, the second valid CSI-RS, and the on-off mechanism. Further, the CSI report may be a periodic report, or the CSI report may be an aperiodic report. The CSI report may be transmitted to the network via a physical UL control channel (PUCCH) or a physical UL shared channel (PUSCH).

Realization of the present invention is not limited to the above description.

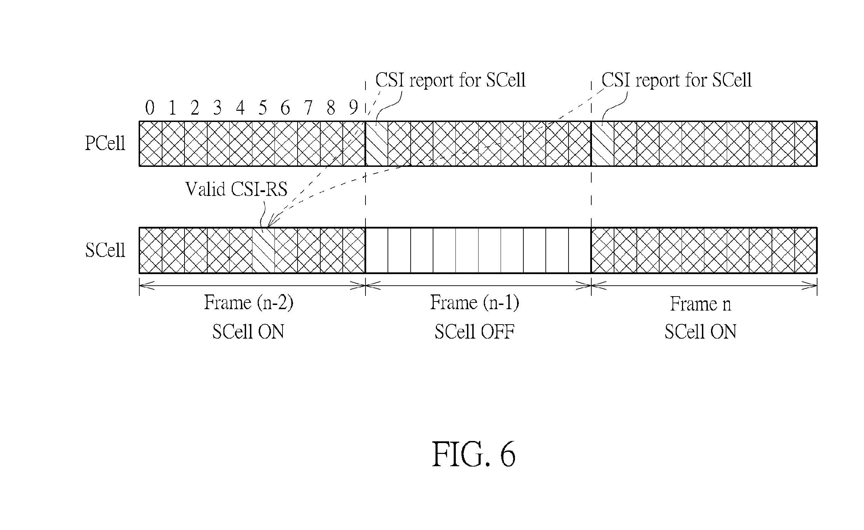

In one example, for the periodic CSI report transmitted in an UL subframe n, the valid CSI-RS corresponding to the transmitted periodic CSI report may be a valid DL subframe (n-k) (e.g., k=5). Fig. 6 is a schematic diagram of the allocations of the CSI reference sources and the CSI reports according to an example of the present invention. Fig. 6 is an example for illustrating the process 50. In the present example, a primary cell (PCell) and a secondary cell (SCell) may be the first cell and the second cell in the process 50, respectively. In addition, the SCell may be configured with the on-off mechanism. The state of the SCell is the on state in the frame (n-2), the state of the SCell is the off state in the frame (n-1), and the state of the SCell is the on state in the frame n. The communication device may transmit the first CSI report for the SCell to the PCell in the frame (n-1) and the second CSI report for the SCell to the PCell in the frame n. The first valid CSI-RS corresponding to the first CSI report may be the subframe 5 of the frame (n-2). The second valid CSI-RS corresponding to the second CSI report may be the subframe 5 of the frame (n-2) instead of the subframe 5 of the frame (n-1) because the state of the SCell is the off state in the frame (n-1) and the subframe 5 of the frame (n-2) is the latest valid CSI-RS corresponding to the second CSI report in the frame n.

In one example, the communication device may transmit the first CSI report for the second cell in the second subframe (e.g., the frame n in Fig. 6) to the first cell, when the first valid CSI-RS and the second valid CSI-RS are the same (e.g., transmitted in the subframe 5 of the frame (n-2) in Fig. 6). That is, the first CSI report is transmitted instead of transmitting the second CSI report, when the first valid CSI-RS and the second valid CSI-RS are the same. In one example, the communication device may drop the second CSI report, when the first valid CSI-RS and the second valid CSI-RS are the same (e.g., transmitted in the subframe 5 of the frame (n-2) in Fig. 6). That is, the second CSI report is not transmitted, when the first valid CSI-RS and the second valid CSI-RS are the same.

In one example, the communication device may stop performing a measurement for obtaining the second CSI report, when the first valid CSI-RS and the second valid CSI-RS are the same (e.g., transmitted in the subframe 5 of the frame (n-2) in Fig. 6). That is, the measurement for the second CSI report is further stopped to save power consumption, when the first valid CSI-RS and the second valid CSI-RS are the same.

In one example, the communication device may transmit a predetermined value (e.g., CQI=0 (out of range (OOR)), RI=1) for the second cell in the second subframe to the first cell, when the first valid CSI-RS and the second valid CSI-RS are the same (e.g., transmitted in the subframe 5 of the frame (n-2) in Fig. 6). That is, the predetermined value is transmitted instead of transmitting the second CSI report, when the first valid CSI-RS and the second valid CSI-RS are the same.

As a result, according to the above description, the problem of processing of the CSI report and the CSI-RS under the on-off mechanism is solved.

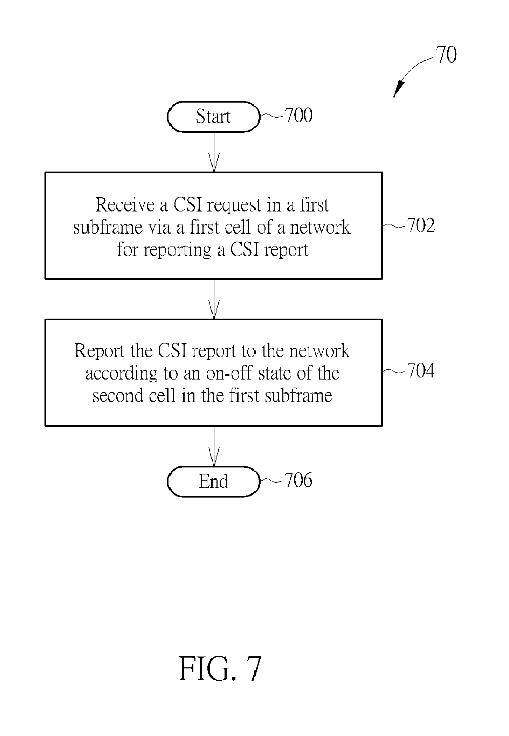

Fig. 7 is a flowchart of a process 70 according to an example of the present invention. The process 70 may be utilized in a communication device for handling CSI. The process 70 may be compiled into the program code 214 and includes the following steps:
- Step 700:: Start.
- Step 702:: Receive a CSI request in a first subframe via a first cell of a network for reporting a CSI report.
- Step 704:: Report the CSI report to the network according to an on-off state of the second cell in the first subframe.
- Step 706:: End.

According to the process 70, the communication device may receive a CSI request in a first subframe via a first cell of a network for reporting a CSI report. Then, the communication device may report the CSI report to the network according to an on-off state of the second cell in the first subframe. In other words, the CSI report for the second cell is reported according to the on-off state of the second cell.

Realization of the present invention is not limited to the above description.

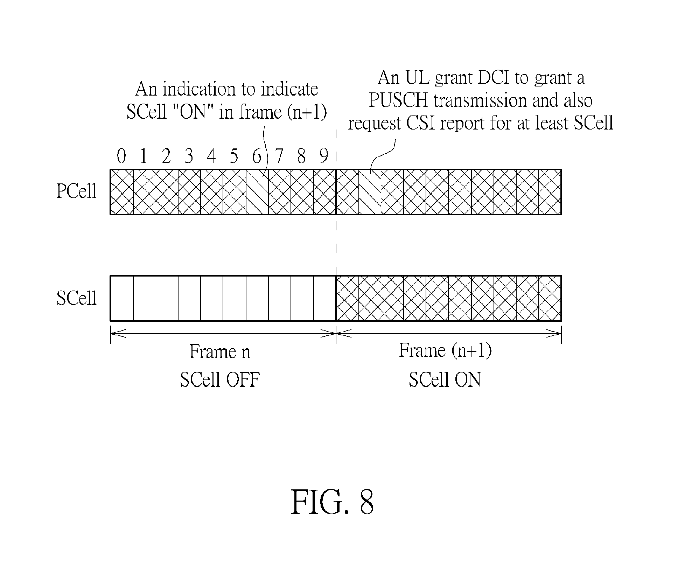

Fig. 8 is a schematic diagram of the on-off state, the CSI repots and the cells according to an example of the present invention. In the present example, a PCell and a SCell may be the first cell and the second cell in the process 70, respectively. In addition, the SCell may be configured with the on-off mechanism. The state of the SCell is the off state in the frame n, and the state of the SCell is the on state in the frame (n+1). However, the communication device may not successfully receive an on-off indicator for the SCell from the network (e.g., via PCell). Hence, for the communication device, the state of the SCell may be the off state in the frame (n+1). In addition, the communication device may receive DCI including an UL grant via the PCell in the subframe 1 of the frame (n+1) wherein the UL grant is for reporting the CSI report for the SCell.

In one example, the communication device may report the CSI report including an OOR to the network (e.g., via first cell), when the second cell is in an off state in the first subframe. That is, the OOR (i.e. CQI=0) is reported for the second cell, when the second cell is in the off state in the first subframe. In one example, the communication device may report the CSI report including a RI with (e.g., configured as) the lowest level (e.g., rank=1) to the network (e.g., via first cell), when the second cell is in an off state in the first subframe. That is, the RI configured as the lowest level is reported to the first cell, when the second cell is in the off state in the first subframe.

In one example, the communication device may report the CSI report to the network (e.g., via first cell), when the second cell is in an off state in the first subframe and the first subframe is a valid subframe for a CSI measurement. That is, the CSI report for the second cell is reported according the CSI measurement for obtaining the second CSI report when the second cell is in the off state in the first subframe and the first subframe is the valid subframe for the CSI measurement. In one example, the first subframe may not be a valid subframe for a CSI measurement. In the example, the CSI report for the second cell may be reported as the OOR (i.e. CQI=0). In addition, in one example, the first cell in the process 70 may be a primary cell.

As a result, according to the above description, the problem of processing of the CSI report and the CSI-RS under the on-off mechanism is solved.

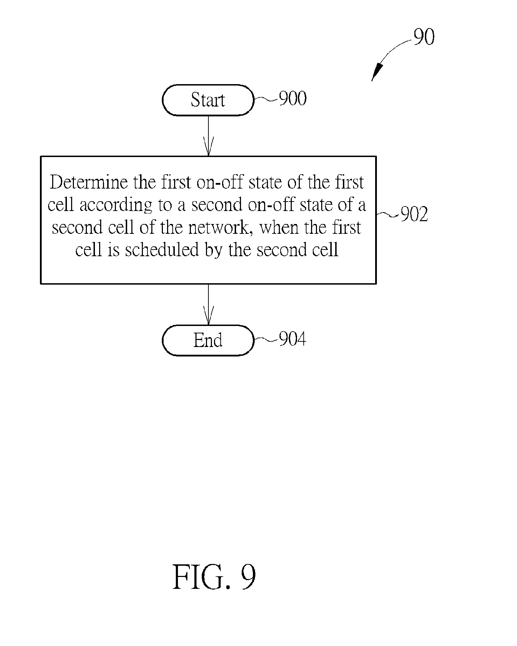

Fig. 9 is a flowchart of a process 90 according to an example of the present invention. The process 90 may be utilized in a communication device for determining a first on-off state of a first cell of a network. The process 90 may be compiled into the program code 214 and includes the following steps:
- Step 900:: Start.
- Step 902:: Determine the first on-off state of the first cell according to a second on-off state of a second cell of the network, when the first cell is scheduled by the second cell.
- Step 904:: End.

According to the process 90, the communication device may determine the first on-off state of the first cell according to a second on-off state of a second cell of the network, when the first cell is scheduled by the second cell.

In one example, the first on-off state of the first cell (e.g., in a frame) is determined as an off state, if the second on-off state of the second cell (e.g., in the frame) is the off state. In one example, the first on-off state of the first cell (e.g., in a frame) is determined as an on state, if the second on-off state of the second cell (e.g., in the frame) is the on state.

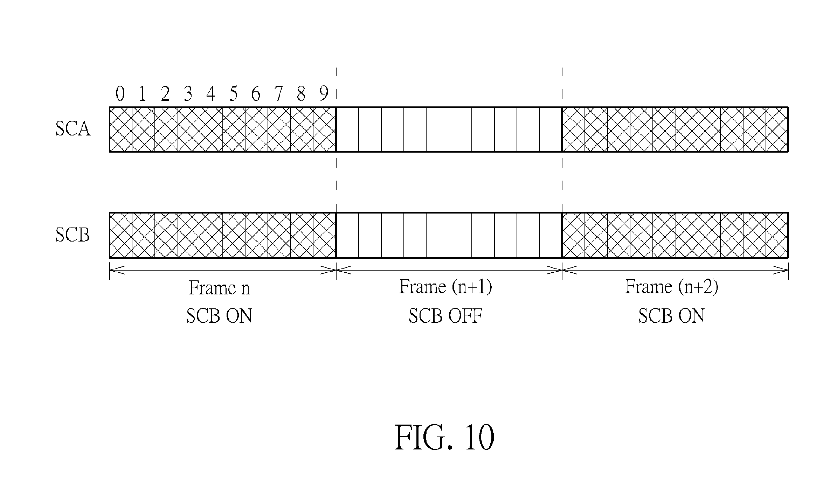

Fig. 10 is a schematic diagram of the on-off states of the cells according to an example of the present invention. In the present example, a SCell SCB and a SCell SCA may be the first cell and the second cell in the process 90, respectively. The SCell SCB may be scheduled by the SCell SCA. In addition, the SCell SCA may be configured with the on-off mechanism. The state of the SCell SCA is the on state in the frame n, the state of the SCell SCA is the off state in the frame (n+1), and the state of the SCell SCA is the on state in the frame (n+2). Thus, according to the present invention, the state of the SCell SCB is the on state in the frame n, the state of the SCell SCB is the off state in the frame (n+1), and the state of the SCell SCB is the on state in the frame (n+2).

As a result, according to the above description, the problem of determination of the on-off state of the cell under the on-off mechanism is solved.

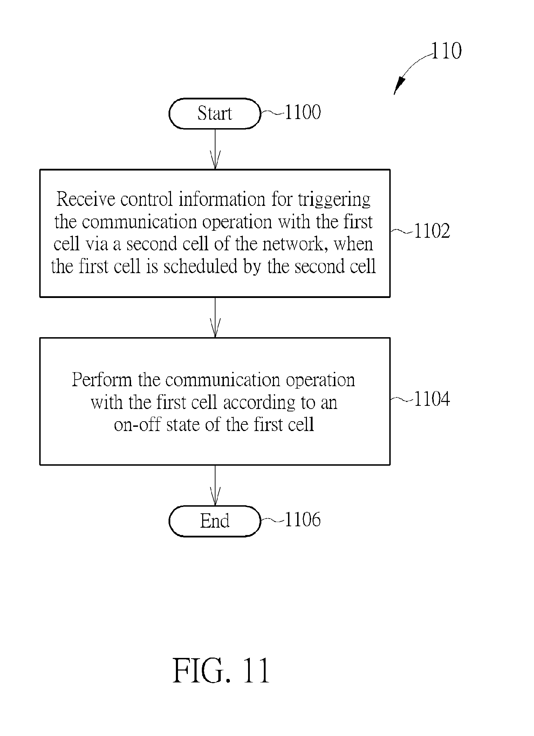

Fig. 11 is a flowchart of a process 110 according to an example of the present invention. The process 110 may be utilized in a communication device for performing a communication operation with a first cell of a network. The process 110 may be compiled into the program code 214 and includes the following steps:
- Step 1100:: Start.
- Step 1102:: Receive control information for triggering the communication operation with the first cell via a second cell of the network, when the first cell is scheduled by the second cell.
- Step 1104:: Perform the communication operation with the first cell according to an on-off state of the first cell.
- Step 1106:: End.

According to the process 110, the communication device may receive (e.g., DL) control information for triggering the communication operation (e.g., UL transmission and/or DL reception) with the first cell via a second cell of the network, when the first cell is scheduled by the second cell. Then the communication device may perform the communication operation with the first cell according to an on-off state of the first cell. In other words, the communication operation is performed with the first cell according to the control information received via the second cell and the on-off state of the first cell, when the first cell is scheduled by the second cell.

Realization of the present invention is not limited to the above description.

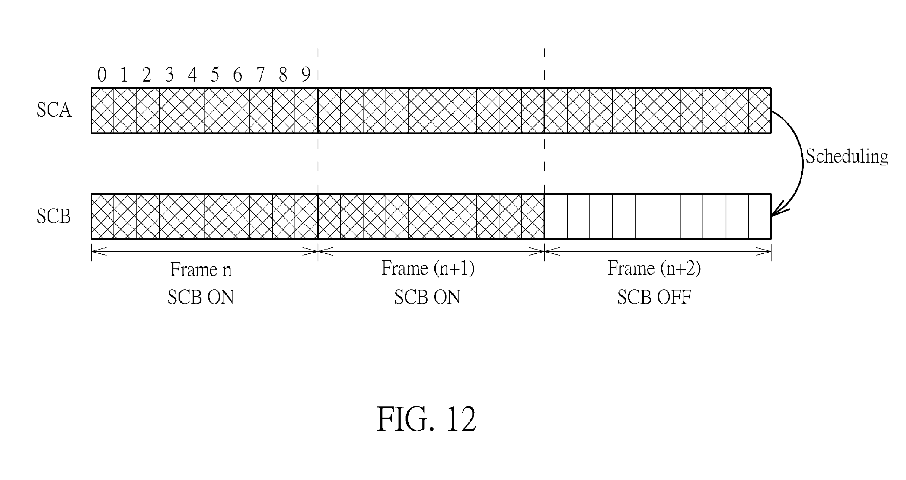

Fig. 12 is a schematic diagram of the scheduling and the communication operation according to an example of the present invention. In the present example, a SCell SCB and a SCell SCA may be the first cell and the second cell in the process 110, respectively. The SCell SCA may not be configured with the on-off mechanism. In addition, the SCell SCB may be scheduled by the SCell SCA, and the SCell SCB may be configured with the on-off mechanism. The state of the SCell SCB is the on state in the frame n, the state of the SCell SCB is the on state in the frame (n+1), and the state of the SCell SCB is the off state in the frame (n+2).

In one example, the communication device may perform the communication operation with the first cell, when the on-off state of the first cell is an off state. That is, the communication operation may be performed with the first cell in a frame (e.g., the frame (n+2) in Fig. 12), when the first cell is in the off state and the second cell receives the control information for the first cell in the frame (e.g., the frame (n+2) in Fig. 12). In one example, the communication device may determines that the control information is error information (i.e., not valid), and may ignore it. Accordingly, the communication device may stop the communication operation with the first cell, when the on-off state of the first cell is an off state. In one example, the control information may include an UL grant and/or a DL assignment. In one example, the communication operation may include an UL transmission and/or a DL reception. In one example, the second cell in the process 110 may be a primary cell.

In one example, the first cell (e.g., in a frame) may not be scheduled by the second cell (e.g., in the frame), if the second cell is configured with the on-off mechanism and the first cell is not configured with the on-off mechanism.

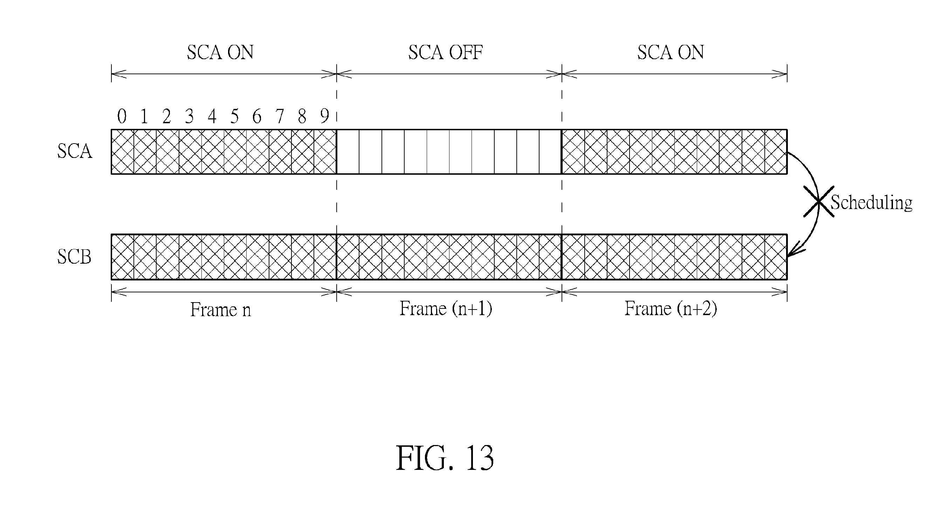

Fig. 13 is a schematic diagram of the scheduling and the on-off state according to an example of the present invention. A SCell SCB and a SCell SCA may be the first cell and the second cell in the example, respectively. In addition, the SCell SCA may be configured with the on-off mechanism. The state of the SCell SCA is the on state in the frame n, the state of the SCell SCA is the off state in the frame (n+1), and the state of the SCell SCA is the on state in the frame (n+2). The SCell SCB may not be configured with the on-off mechanism. Thus, according to the present invention, the SCell SCB may not be scheduled by the SCell SCA. That is, the SCell SCA may not be the scheduling cell of the SCell SCB.

As a result, according to the above description, the problem of performing the communication operation with the cell under the on-off mechanism is solved.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides a method of handling the CSI reports under the on-off mechanism. Thus, the collision and processing of the CSI reports are solved according to above description. As a result, the CSI reports under the on-off mechanism may be performed regularly.

## Claims

1. A method of handling channel status information (CSI) for a communication device, **characterized by** the method comprising the steps of:
transmitting a first CSI report for a first cell of a network to the network (302); and
dropping a second CSI report for a second cell of the network, when the second CSI report collides with the first CSI report and the second cell is configured with an on-off mechanism (304).

2. The method of claim 1, **characterized in that** a first reporting type of the first CSI report and a second reporting type of the second CSI report are different, or the first reporting type of the first CSI report and the second reporting type of the second CSI report are the same.

3. The method of any of claims 1-2, **characterized in that** one of a first reporting type of the first CSI report and a second reporting type of the second CSI report comprises one of a rank indicator (RI), a wideband channel quality indicator (WB-CQI), a subband channel quality indicator (SB-CQI) and a precoding matrix indicator (PMI).

4. The method of any of claims 1-3, **characterized in that** a first serving cell index of the first cell and a second serving cell index of the second cell are different.

5. The method of any of claims 1-4, **characterized in that** a first CSI process identification (ID) of the first CSI report and a second CSI process ID of the second CSI report are the same, or the first CSI process ID of the first CSI report and the second CSI process ID of the second CSI report are different.

6. The method of any of claims 1-5, **characterized in that** the first CSI report is configured with a CSI process ID, and the second CSI report is not configured with any CSI process ID.

7. The method of any of claims 1-6, **characterized in that** the first CSI report is not configured with any CSI process ID, and the second CSI report is configured with a CSI process ID 1.

8. A method of handling channel status information (CSI) for a communication device, **characterized by** the method comprising the steps of:
performing a sounding reference signal (SRS) transmission with a first cell of a network (402); and
dropping a CSI report for a second cell of the network, when the CSI report collides with the SRS transmission and the second cell is configured with an on-off mechanism (404).

9. A method of handling channel status information (CSI) for a communication device, **characterized by** the method comprising the steps of:
transmitting a first CSI report for a second cell of a network in a first subframe to a first cell of the network (502); and
processing a second CSI report for the second cell in a second subframe according to a first valid CSI reference resource (CSI-RS) corresponding to the first CSI report and a second valid CSI-RS corresponding to the second CSI report, when the second cell is configured with an on-off mechanism (504).

10. The method of claim 9, **characterized in that** the step of processing the second CSI report for the second cell in the second subframe according to the first valid CSI-RS corresponding to the first CSI report and the second valid CSI-RS corresponding to the second CSI report comprises:
transmitting the first CSI report for the second cell in the second subframe to the first cell, when the first valid CSI-RS and the second valid CSI-RS are the same.

11. The method of claim 9, **characterized in that** the step of processing the second CSI report for the second cell in the second subframe according to the first valid CSI-RS corresponding to the first CSI report and the second valid CSI-RS corresponding to the second CSI report comprises:
dropping the second CSI report, when the first valid CSI-RS and the second valid CSI-RS are the same.

12. The method of claim 9, **characterized in that** the step of processing the second CSI report for the second cell in the second subframe according to the first valid CSI-RS corresponding to the first CSI report and the second valid CSI-RS corresponding to the second CSI report comprises:
stopping performing a measurement for obtaining the second CSI report, when the first valid CSI-RS and the second valid CSI-RS are the same.

13. The method of claim 9, **characterized in that** the step of processing the second CSI report for the second cell in the second subframe according to the first valid CSI-RS corresponding to the first CSI report and the second valid CSI-RS corresponding to the second CSI report comprises:
transmitting a predetermined value for the second cell in the second subframe to the first cell, when the first valid CSI-RS and the second valid CSI-RS are the same.

14. A method of handling channel status information (CSI) for a communication device, **characterized by** the method comprising the steps of:
receiving a CSI request in a first subframe via a first cell of a network for reporting a CSI report (702); and
reporting the CSI report to the network according to an on-off state of a second cell of the network in the first subframe (704).

15. The method of claim 14, **characterized in that** the step of reporting the CSI report to the network according to the on-off state of the second cell of the network in the first subframe comprises:
reporting the CSI report comprising an out of range (OOR) to the network, when the second cell is in an off state in the first subframe.

16. The method of claim 14, **characterized in that** the step of reporting the CSI report to the network according to the on-off state of the second cell of the network in the first subframe comprises:
reporting the CSI report comprising a rank indicator (RI) with the lowest level to the network, when the second cell is in an off state in the first subframe.

17. The method of claim 14, **characterized in that** the step of reporting the CSI report to the network according to the on-off state of the second cell of the network in the first subframe comprises:
reporting the CSI report to the network, when the second cell is in an off state in the first subframe and the first subframe is a valid subframe for a CSI measurement.

18. The method of any of claims 14-17, **characterized in that** the first subframe is not a valid subframe for a CSI measurement.

19. A method of determining a first on-off state of a first cell of a network for a communication device, **characterized by** the method comprising the steps of:
determining the first on-off state of the first cell according to a second on-off state of a second cell of the network, when the first cell is scheduled by the second cell (902).

20. The method of claim 19, **characterized in that** the first on-off state is determined as an off state, if the second on-off state is the off state.

21. A method of performing a communication operation with a first cell of a network for a communication device, **characterized by** the method comprising the steps of:
receiving control information for triggering the communication operation with the first cell via a second cell of the network, when the first cell is scheduled by the second cell (1102); and
performing the communication operation with the first cell according to an on-off state of the first cell (1104).

22. The method of claim 21, **characterized in that** the step of performing the communication operation with the first cell according to the on-off state of the first cell comprises:
performing the communication operation with the first cell, when the on-off state of the first cell is an off state.

23. The method of claim 21, **characterized in that** the communication device determines the control information is error information, and the step of performing the communication operation with the first cell according to the on-off state of the first cell comprises:
stopping the communication operation with the first cell, when the on-off state of the first cell is an off state.

24. The method of any of claims 21-23, **characterized in that** the communication operation comprises an UL transmission and/or a DL reception, or the control information comprises an UL grant and/or a DL assignment.
